# FASCICULE DE BREVET EUROPEEN

(11) **EP 3 625 041 B1**
(45) Date de publication et mention de la délivrance du brevet: **18.08.2021**
(21) Numéro de dépôt: 18722574.3
(22) Date de dépôt: 14.05.2018
(51) Int. Cl.: B29D 24/00, B29D 99/00, B29C 70/20, B29C 70/68, E04C 2/34

(54) **STRUCTURE DE CONFORMATION, PIÈCE COMPOSITE COMPRENANT UNE TELLE STRUCTURE DE CONFORMATION, PROCÉDÉ DE FABRICATION D'UNE TELLE PIÈCE COMPOSITE**
FORMSTRUKTUR, VERBUNDTEIL MIT EINER SOLCHEN FORMSTRUKTUR, VERFAHREN ZUR HERSTELLUNG EINES SOLCHEN VERBUNDTEILS
SHAPING STRUCTURE, COMPOSITE PART COMPRISING SUCH A SHAPING STRUCTURE, METHOD FOR MANUFACTURING SUCH A COMPOSITE PART

(30) Priorité: 15.05.2017 FR 1754261
(43) Date de publication de la demande: 25.03.2020
(73) Titulaire: Porcher Industries, 38300 Badinières (FR)
(72) Inventeur: PORCHERET, Jacques, 38340 Veyssilieu (FR); MACREZ, Freddy, 01150 Lagnieu (FR); RAMEL, Patrick, 01800 Charnoz (FR)
(74) Mandataire: Lavoix
(86) Numéro de dépôt international: PCT/EP2018/062305
(87) Numéro de publication internationale: WO 2018/210709

(56) Documents cités:
- EP-A1- 0 436 419
- WO-A1-2007/096172
- US-B1- 7 051 489

## Description

La présente invention concerne une structure de conformation, une pièce composite qui comprend une telle structure de conformation, ainsi qu'un procédé de fabrication d'une telle pièce composite.

L'invention concerne le domaine des matériaux composites.

EP 0 436 419 A1 décrit un produit composite formé d'au moins deux peaux en tôle, les peaux étant reliées entre elles par une âme textile constituée d'au moins une nappe tricotée ou non tissée, notamment imprégnée d'une résine et mise en forme avec des saillies qui sont susceptibles de former des ondulations. Ce produit composite est destiné à être comblé par un matériau de remplissage durcissable tel que du polyuréthane ou une résine.

WO 2007/096172 décrit une structure tridimensionnelle comprenant des structures bidimensionnelles faites en grille de produits linéaires, qui sont en forme de barre. Deux couches de couverture peuvent être attachées à la structure tridimensionnelle par coutures.

US 7 051 489 B1 décrit un panneau de faux plafond comprend deux feuilles, auxquelles un membre de renfort trapézoïde est attaché par liaison adhésive. Ces différents éléments sont en non-tissé textile, par exemple un mat de verre.

FR 2 060 612 B décrit un conformateur en tissu pour des masses durcissables, le conformateur incluant deux nappes de tissu qui sont maintenues écartées l'une de l'autre à une distance limitée par des fils d'entretoisement répartis sur leurs surfaces.

Pour certaines applications, ce conformateur en tissu présente l'inconvénient de nécessiter la mise en oeuvre d'un nombre important de fils d'entretoisement pour offrir une résistance suffisante face aux contraintes imposées par le matériau durcissable introduit entre les deux nappes, tendant à éloigner les nappes l'une de l'autre. L'ajout de ces fils d'entretoisement supplémentaires complique la fabrication du conformateur. De surcroît, la mise en tension des fils d'entretoisement crée des zones ponctuelles de concentrations de contraintes, qui sont localisées au niveau de la zone de couture des fils d'entretoisement avec les nappes. Ainsi, les zones de concentration de contraintes sont susceptibles de produire des amorces de déchirement de la nappe. De plus, avant l'introduction de ce matériau durcissable entre les nappes, on doit s'assurer que les deux nappes sont effectivement écartées l'une de l'autre sur toute leur surface, afin de permettre une insinuation satisfaisante et régulière du matériau durcissable entre elles, en particulier pour les matériaux durcissables dont la coulabilité est mauvaise.

Par conséquent, l'invention vise à porter remède aux inconvénients susmentionnés en proposant une nouvelle structure de conformation polyvalente qui, tout en étant facile d'utilisation, est particulièrement résistante, peu coûteuse et est avantageusement autoportante.

L'invention est définie dans la revendication 1.

Grâce à l'invention, la feuille d'entretoisement offre une double fonction, en conférant une résistance importante et un caractère autoportant à la structure de conformation. En premier lieu, le caractère surfacique de cette feuille d'entretoisement la rend intrinsèquement résistante aux efforts qui tendent à écarter les feuilles de conformation l'une de l'autre, en particulier lorsqu'un matériau durcissable à l'état non durci, ou réticulable à l'état non réticulé, est introduit entre ces feuilles de conformation, en vue de former une pièce en matériau composite, ou « pièce composite », avec la structure de conformation. De plus, ce caractère surfacique de la feuille d'entretoisement permet de prévoir une fixation surfacique de cette feuille d'entretoisement avec les feuilles de conformation, via la surface de fixation, de sorte que la fixation est résistante aux efforts susmentionnés et répartit les contraintes appliquées sur les feuilles de conformation par la feuille d'entretoisement, ce qui limite le risque de déchirure des feuilles de conformation par concentration de contraintes. Lorsqu'un matériau durcissable ou réticulable est introduit entre les feuilles de conformation, le caractère macroporeux de la feuille d'entretoisement favorise en outre une bonne répartition du matériau durcissable ou réticulable, notamment lorsque celui-ci est à l'état non durci ou non réticulé, le matériau durcissable ou réticulable traversant sans difficulté les macropores de la feuille d'entretoisement macroporeuse. Par ailleurs, lorsqu'un matériau durcissable ou réticulable est conformé entre les feuilles de conformation dans un état durci, la feuille d'entretoisement joue le rôle d'un renfort structurel de ce matériau durcissable ou réticulable, à la façon d'une armature, de sorte que la pièce composite ainsi formée est particulièrement robuste. Il n'est donc pas nécessaire de prévoir une armature de renfort spécifique. Par ailleurs, la feuille d'entretoisement, comparativement à de simple fils, présente une rigidité relativement élevée pour maintenir les feuilles de conformation à distance l'une de l'autre sur tout ou partie de leur surface en l'absence de sollicitations visant à rapprocher les feuilles de conformation l'une de l'autre, ou en présence de sollicitations modestes, même si aucun matériau durcissable ou réticulable n'est introduit entre les deux feuilles de conformation. Ainsi, la structure de conformation est autoportante. Néanmoins, on prévoit avantageusement que la feuille d'entretoisement présente une certaine élasticité, de manière à autoriser un repli ou un aplatissement de la structure de conformation, en appliquant un effort suffisant, visant à rabattre les feuilles de conformation l'une contre l'autre, afin de réduire l'encombrement de la structure de conformation. On peut aussi prévoir que la feuille d'entretoisement est particulièrement rigide de façon à empêcher ce repli ou cet aplatissement. En tout état de cause, du fait de ce caractère autoportant, la structure de conformation peut être utilisée seule, en tant que structure autoportante légère, voire en tant qu'espaceur, sans introduction de matériau entre les feuilles de conformation. Enfin, la structure de conformation de l'invention a l'avantage d'être particulièrement peu coûteuse à fabriquer.

Selon d'autres caractéristiques optionnelles et avantageuses de l'invention, prises selon toute combinaison techniquement admissible :
- on prévoit qu'au moins deux crêtes paires successives sont fixées à la première feuille de conformation, définissant ainsi respectivement deux surfaces de fixation successives, et une longueur inter-crêtes, mesurée parallèlement à la première direction entre ces deux surfaces de fixation successives, est d'une valeur comprise entre 1,0 fois et 1,5 fois la valeur d'une longueur de surface de la surface de fixation, cette longueur de surface étant mesurée parallèlement à la première direction ;
- les crêtes paires sont régulièrement réparties le long de la première direction, et les crêtes impaires sont régulièrement réparties le long de la première direction ;
- au moins l'une des surfaces de fixation est le siège d'une fixation à l'aide d'un agent de fixation, tel qu'un liant thermoplastique, liant la crête concernée avec la feuille de conformation concernée, l'agent de fixation étant réparti sur la surface de fixation de cette crête ;
- au moins l'une des surfaces de fixation est le siège d'une fixation par soudage de la crête concernée avec la feuille de conformation concernée, alors que la feuille de conformation concernée comprend une couche de matériau thermosensible utilisée pour ce soudage ;
- au moins l'une des surfaces de fixation est le siège d'une fixation par couture de la crête concernée avec la feuille de conformation concernée ;
- la couche de matériau non-tissé comprend un voile de verre comprenant des fibres de verre liées les unes aux autres ;
- les macropores de la feuille d'entretoisement présentent une dimension nominale comprise entre environ 2 et 40 mm, de préférence entre 5 et 20 mm ;
- la grille de fils présente une densité de fils comprise entre 0,25 et 5 fils par centimètre, de préférence entre 0,5 et 2 fils par centimètre.

L'invention a également pour objet une pièce composite selon la revendication 10. Selon l'invention, la pièce composite comprend une structure de conformation conforme à ce qui précède, et une couche centrale, formée par un matériau durcissable ou réticulable, respectivement à l'état durci ou réticulé, la couche centrale occupant l'espace compris entre les deux feuilles de conformation, la feuille d'entretoisement s'étendant au sein de la couche centrale.

De préférence, le matériau durcissable ou réticulable présente une structure moussée lorsqu'il est respectivement à l'état durci ou réticulé.

L'invention a également pour objet un procédé selon la revendication 12 de fabrication d'une pièce composite conforme à ce qui précède. Selon l'invention, le procédé de fabrication comprend une étape a) d'introduction du matériau durcissable ou réticulable, respectivement dans un état non durci ou non réticulé, entre les deux feuilles de conformation de la structure de conformation pour former la couche centrale, les deux feuilles de conformation délimitant la forme de la couche centrale par conformation du matériau durcissable ou réticulable entre ces deux feuilles de conformation.

L'invention sera mieux comprise à la lecture de la description qui suit, donnée uniquement à titre d'exemple non limitatif et faite en se référant aux dessins annexés, dans lesquels :
- La figure 1 est une vue en perspective d'une structure de conformation selon un mode de réalisation conforme à l'invention ;
- La figure 2 est une vue de côté partielle de la structure de conformation de la figure 1 ;
- La figure 3 est une vue similaire à la figure 2, d'une pièce composite comprenant la structure de conformation des figures 1 et 2 ;
- La figure 4 est une autre vue de côté partielle de la structure de conformation des figures 1 à 3 ;
- La figure 5 est une vue de côté partielle d'une structure de conformation selon un autre mode de réalisation conforme à l'invention ;
- La figure 6 est une vue de côté partielle d'une structure de conformation selon un autre mode de réalisation conforme à l'invention ; et
- La figure 7 est une vue de côté partielle d'une structure de conformation selon un autre mode de réalisation conforme à l'invention.

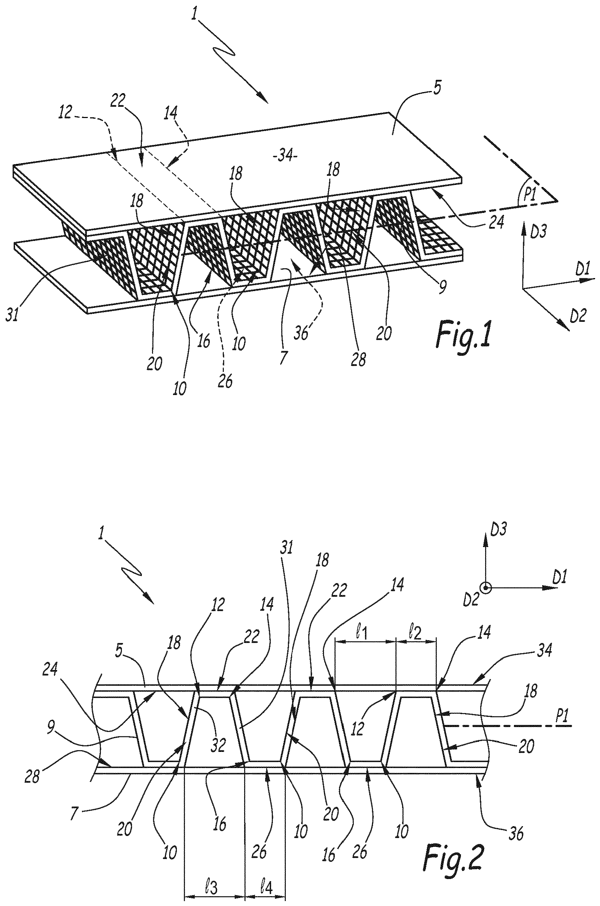

Les figures 1 à 4 illustrent une structure de conformation 1. La structure de conformation 1 comprend principalement une feuille de conformation 5, une feuille de conformation 7 et une feuille d'entretoisement 9. Sur les dessins, les feuilles 5, 7 et 9 sont représentées avec une épaisseur très exagérée pour faciliter la lecture. En réalité, on prévoit des feuilles 5, 7 et 9 d'une épaisseur moyenne comprise par exemple entre 0,1 mm et 5 mm, en fonction de l'application.

Les deux feuilles de conformation 5 et 7 se font face et sont à distance l'une de l'autre. De préférence, les feuilles 5 et 7 sont sensiblement parallèles entre elles.

La feuille d'entretoisement 9 est disposée entre les feuilles 5 et 7. La feuille d'entretoisement 9 présente une forme ondulée. Dans le présent exemple, l'ondulation de la feuille 9 est réalisée par pliage de cette feuille 9 le long de traits parallèles, notamment des traits 10, 12, 14 et 16. Sur la figure 1, les traits 12 et 14 sont représentés en pointillés par transparence au travers de la feuille 5. Dans son ondulation, la feuille d'entretoisement 9 décrit une succession de crêtes 18 et 20, ou vagues, parmi lesquelles des crêtes paires 18, orientées du côté de la feuille 5 et des crêtes impaires 20 orientées du côté de la feuille 7. Les crêtes paires 18 portent chacune deux traits de pliage 12 et 14, alors que les crêtes impaires 20 portent chacune deux traits de pliage 10 et 16. Lorsque l'on définit un plan médian P1 s'étendant à mi-chemin entre les feuilles 5 et 7 parallèlement à ces dernières, les crêtes paires 18 sont formées par les parties de la feuille 9 comprises entre le plan P1 et la feuille 5, alors que les crêtes impaires 20 sont formées par les parties de la feuille 9 qui s'étend de l'autre côté du plan médian P1, entre ce plan médian P1 et la feuille 7. Ainsi ces crêtes paires 18 et ces crêtes impaires 20 sont alternées et réparties selon une direction D1 parallèle au plan P1 de la structure de conformation 1.

Dans le présent exemple, chaque crête paire 18 est fixée à la feuille 5 et chaque crête impaire 20 est fixée à la feuille 7. Chaque crête paire 18 définit une surface 22 délimitée par les traits 12 et 14, par laquelle la crête 18 est fixée à la feuille 5. Cette surface 22 est en appui contre une face interne 24 de la feuille 5, cette face interne 24 étant tournée du côté de la feuille 7. De même, chaque crête impaire 20 définit une surface 26 délimitée par les traits 10 et 16, par l'intermédiaire de laquelle la crête 20 est fixée à la feuille 7. La surface 26 est en appui contre une face interne 28 de la feuille 7, cette face interne 28 étant tournée du côté de la feuille 5. Dans l'exemple des figures 1 à 3, toutes les surfaces 22 et 26 sont le siège d'un moyen de fixation de la feuille 9, respectivement à la feuille 5 et à la feuille 7.

Dans le présent exemple, les crêtes 18 et 20 sont toutes fixées à l'aide d'un même moyen. En variante, On peut également prévoir des modes de fixation différents d'une crête 18 ou 20 à l'autre.

La fixation des crêtes 18 et 20 est préférentiellement effectuée à l'aide d'un agent de fixation, ou agent collant, tel qu'un liant thermoplastique. L'agent de fixation est préférentiellement réparti sur toute la surface 22 ou 26 concernée. En alternative, ou de manière additionnelle, la fixation de chaque crête 18 ou 20, respectivement avec la feuille 5 ou 7, est effectuée par couture de la crête 18 ou 20 concernée avec la feuille de conformation 5 ou 7 concernée. En pratique, on utilise de préférence un ou plusieurs fils traversant tour à tour la feuille d'entretoisement 9 avec la feuille de conformation 5 ou 7 associée à la surface 22 ou 26 concernée, pour former des points de couture, préférentiellement répartis sur toute la surface 22 ou 26 concernée. En alternative, ou de manière additionnelle, la fixation peut être effectuée par soudure. On préfère une soudure par ultrasons haute fréquence, même si d'autres techniques de soudage peuvent être mises en oeuvre. Pour cela, on prévoit par exemple qu'au moins l'une des feuilles 5, 7 et 9 comprend, localement pour les surfaces 22 ou 26, ou sur toute la surface de la feuille 5, 7 et/ou 9 concernée, une couche de matériau adapté à ce mode de fixation, du genre matériau thermosensible. On utilise ce matériau thermosensible pour le soudage, c'est à dire que la fixation est réalisée par l'intermédiaire de ce matériau, lequel sert de matériau pour former la soudure au niveau des surfaces de fixation. Par exemple, le matériau thermosensible réagit aux ultrasons haute fréquence pour provoquer le soudage. De préférence, la couche de matériau thermosensible est prévue sur au moins l'une des feuilles 5 et 7. Par exemple, on peut choisir l'un des matériaux thermosensibles suivants, en fonction de la température de réactivation et de la force d'adhésion qu'ils procurent : EVA (ethylene vinylacetate), PU (polyuréthanne), PVC (polyvinylchloride), colle chaude polyoléfine (« polyolefin hotmelt adhesives »), polyamide, acrylique. Tout autre matériau thermosensible peut être utilisé en fonction de l'application.

Tout autre moyen de fixation approprié à l'application peut également être envisagé.

En variante, on prévoit que certaines des surfaces 22 et 26 ne sont pas le siège d'une fixation de la crête 18 ou 20 correspondante, mais simplement le siège d'un contact ou mise en appui de la crête 18 ou 20 concernée contre la feuille 5 ou 7 concernée. Au minimum, on prévoit qu'au moins une crête 18 est fixée à la feuille 5 et qu'au moins une crête 20 est fixée à la feuille 7.

De préférence, comme dans le cas du mode de réalisation des figures 1 à 4, les crêtes paires 18 comme les crêtes impaires 20 sont régulièrement réparties le long de la direction D1.

Entre deux surfaces 22 et 26 successives, la feuille 9 forme un rayon 31, chaque rayon 31 étant formé par une partie de la feuille 9 qui s'étend entre une surface 22 et une surface 26 successives. Les rayons 31 s'étendent à l'oblique ou en formant un angle droit avec les feuilles 5 et 7, selon le mode de réalisation envisagé. Dans le cas des figures 1 à 3, les rayons sont obliques.

La feuille d'entretoisement 9 est macroporeuse, c'est-à-dire qu'elle comprend des ouvertures traversantes réparties sur toute sa surface, ou pour le moins sur une portion de l'aire de ses rayons 31. Ce caractère macroporeux permet le passage d'un matériau liquide ou ramolli d'un côté à l'autre de la feuille 9, lorsque ce matériau est coulé ou injecté entre les feuilles 5 et 7. Par exemple, la dimension nominale des macropores, c'est-à-dire par notamment leur diamètre moyen si les macropores sont de forme arrondie, ou la longueur de leur plus grand côté si les macropores sont de forme quadrilatérale, est comprise entre environ 2 et 40 mm, de préférence entre environ 5 et 20 mm (millimètres). On adapte la taille des macropores en fonction de la viscosité du matériau à couler ou injecter.

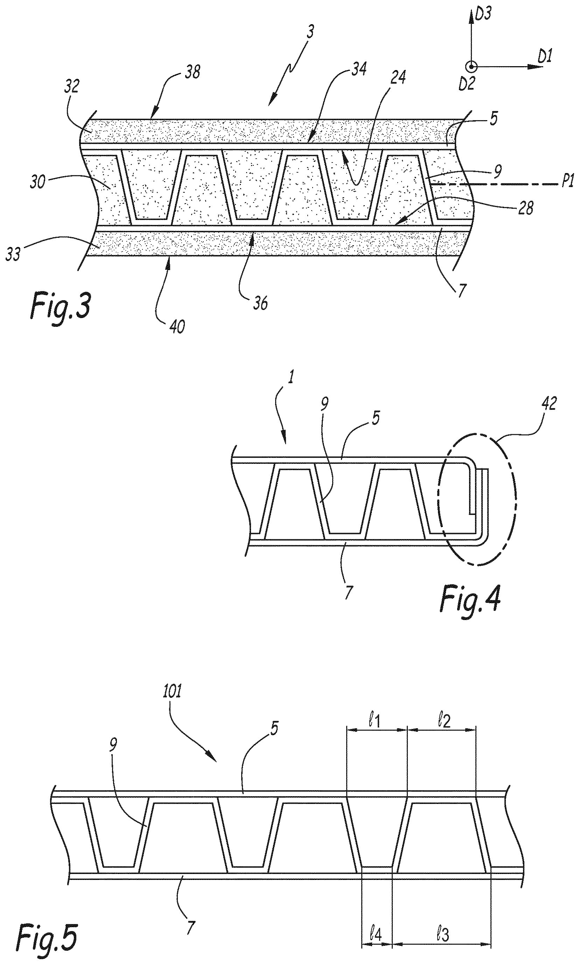

Cette structure de conformation 1 peut être configurée pour permettre la fabrication d'une pièce composite 3, telle que celle représenté sur la figure 3. Par pièce composite 3, on entend une pièce en matériau composite comprenant à la fois la structure 1 et au moins un matériau complémentaire. La pièce 3, selon les matériaux utilisés, constitue par exemple :
- un panneau de séparation, d'isolation thermique ou phonique,
- un panneau d'habillage,
- un coussin amortisseur,
- un panneau de renfort structurel,
- tout ou partie d'un préfabriqué, d'une cloison, d'un mur, d'un plancher ou similaire.

En fonction des matériaux utilisés, la pièce 3 peut être adaptée pour la construction d'un bâtiment ou toute autre structure ou infrastructure immobile telle qu'un pont ou un quai, ou pour une incorporation à des objets mobiles, tels que des véhicules volants, terrestres ou nautiques, ou à des meubles.

Alternativement, cette structure de conformation 1 peut être utilisée seule, c'est-à-dire sans être combinée avec un matériau complémentaire, par exemple sous la forme présentée à la figure 1. Par « utilisée seule », on indique notamment qu'aucun matériau n'est ajouté entre les feuilles 5 et 7. Une ou plusieurs couches externes peuvent toutefois être prévue sur des faces externes 34 et 36 respectives des feuilles 5 et 7. On peut envisager des applications similaires à celles mentionnées ci-dessus pour la pièce 3. Autrement, la structure 1 utilisée seule peut servir de structure de circulation d'air, par exemple pour la ventilation ou le chauffage. On fait alors passer l'air entre les feuilles 5 et 7, l'air se propageant au travers des macropores. Alternativement encore, la structure 1 utilisée seule peut servir de structure gonflable pour la sustentation d'un aéronef, ou la flottaison d'un véhicule aquatique. Alternativement encore, la structure 1 peut servir d'espaceur ou d'entretoise, du fait de son caracère autoportant, comme expliqué ci-après.

Dans le présent exemple, la pièce composite 3 de la figure 3 comprend la structure de conformation 1 des figures 1 et 2.

La pièce 3 comprend une couche centrale 30, occupant, c'est-à-dire de préférence envahissant complètement, l'espace entre les feuilles 5 et 7. En particulier, la feuille d'entretoisement 9 s'étend au sein de la couche 30, et est préférentiellement noyée dans cette couche 30. La couche centrale 30 est en contact avec au moins la majorité de l'aire des faces 24 et 28.

La pièce composite 3 comprend avantageusement deux couches externes 32 et 33, lesquelles servent avantageusement de parement, de façon à former des couches de parement. Les couches 32 et 33 sont rapportées respectivement contre les faces externes 34 et 36 des feuilles 5 et 7, en étant en contact avec au moins la majorité de leur aire. La face externe 34 est tournée du côté opposé à la feuille 7, et la face externe 36 est tournée du côté opposé à la feuille 5. Les couches 32 et 33 présentent préférentiellement une épaisseur moyenne constante, mesurée selon la direction D3. De préférence, chaque couche 32 et 33 présente respectivement une face externe 38 et 40, qui est laissée libre. Les faces 38 et 40 peuvent être planes, ou présenter des reliefs, en fonction de l'application souhaitée.

En variante, la pièce composite 3 est dénuée de couche externe, les faces externes 34 et 36 étant laissées libres. Alternativement, la pièce composite 3 comprend seulement la couche 32 ou seulement la couche 33.

En fonction de l'aire des feuilles 5 et 7, de la distance qui les sépare, et plus généralement en fonction de l'application souhaitée, on adapte le nombre de crêtes 18 et 20 et les dimensions de la feuille 9. Par exemple, on prévoit que les feuilles 5 et 7 mesurent entre 1 et 100 m² (mètres carrés), alors qu'elles sont espacées d'une distance d'espacement comprise entre 5 et 50 cm (centimètres). La distance d'espacement est mesurée parallèlement à une direction D3, perpendiculaire aux directions D1 et D2. Au minimum, lorsque l'aire des feuilles 5 et 7 est particulièrement faible, on prévoit deux crêtes paires 18 et une crête impaire 20, ou vice versa.

Comme illustré sur la figure 4, la structure 1 comprend préférentiellement un bord 42 fermé. Pour former ce bord fermé, on a rabattu l'une contre l'autre des parties extrémales des feuilles 5, 7 et 9, que l'on a avantageusement fixées par collage ou tout autre moyen approprié. Les feuilles 5 et 7 définissent ainsi, au moins sur un bord, un contour fermé délimitant un espace interne.

En variante, les feuilles 5 et 7 ne sont pas ainsi rabattues, de façon à laisser le bord 42 de la structure 1 ouvert.

De préférence, la structure 1 présente une forme générale rectangulaire de façon à définir quatre bords, dont deux sont fermés conformément à la figure 4, ou selon tout autre moyen, et l'un est laissé ouvert, de sorte que la structure 1 forme une poche de conformation, dont le bord ouvert permet l'introduction d'un matériau durcissable à l'état non durci au sein de l'espace interne de la structure 1, défini entre les feuilles 5 et 7. Le matériau durcissable est défini dans ce qui suit.

Comme illustré sur la figure 2, on définit une longueur inter-crêtes l1, qui est mesurée parallèlement à la direction D1 entre deux surfaces 22 successives. Une longueur inter-crêtes l3 est mesurée de la même façon entre deux surfaces 26 successives. Plus précisément, la longueur l1 est mesurée entre le trait de pliage 14 d'une première des surfaces 22 et le trait de pliage 12 d'une deuxième des surfaces 22, successive à la première surface 22, située dans la direction D1 par rapport à la première surface 22. Il en est de même pour la longueur l3, mesurée entre deux traits 10 et 16 successifs. Par ailleurs on définit une longueur de surface l2, correspondant à la longueur mesurée parallèlement à la direction D1 de l'une des surfaces 22, entre les deux traits 12 et 14. On définit de la même façon une longueur de surface l4, pour chaque surface 26, entre les traits 10 et 16 concernés.

De façon préférentielle on prévoit que la longueur l1 est d'une valeur comprise entre 1,0 fois et 1,5 fois la valeur de la longueur l2, ceci pour toutes les crêtes 18 et 20 de la structure 1. On prévoit le même rapport de longueurs entre la longueur l3 et la longueur l4. Par exemple, on prévoit que la longueur l1 mesure 1,25 fois la longueur l2.

Quel que soit le rapport de longueurs choisi, la fixation de la feuille 9 sur les feuilles 5 et 7 est effectuée sur des surfaces dont l'aire est relativement importante de façon à répartir les contraintes, notamment pour éviter tout risque de déchirement des feuilles 5, 7 ou 9 lorsque des efforts antagonistes sont appliqués sur les faces 24 et 28 par un matériau durcissable à l'état non durci.

Dans le mode de réalisation des figures 1 à 4, les longueurs l1 et l3 sont égales, et les longueurs l2 et l4 sont égales.

Dans la structure de conformation 101 du mode de réalisation de la figure 5, les longueurs l1 sont égales entre elles et sont inférieures aux longueurs l3, elles-mêmes égales entre elles. Sur les figures, les éléments désignés par les mêmes signes de référence concernent des caractéristiques similaires de l'invention, mêmes si elles se présentent sous des formes de réalisation différentes.

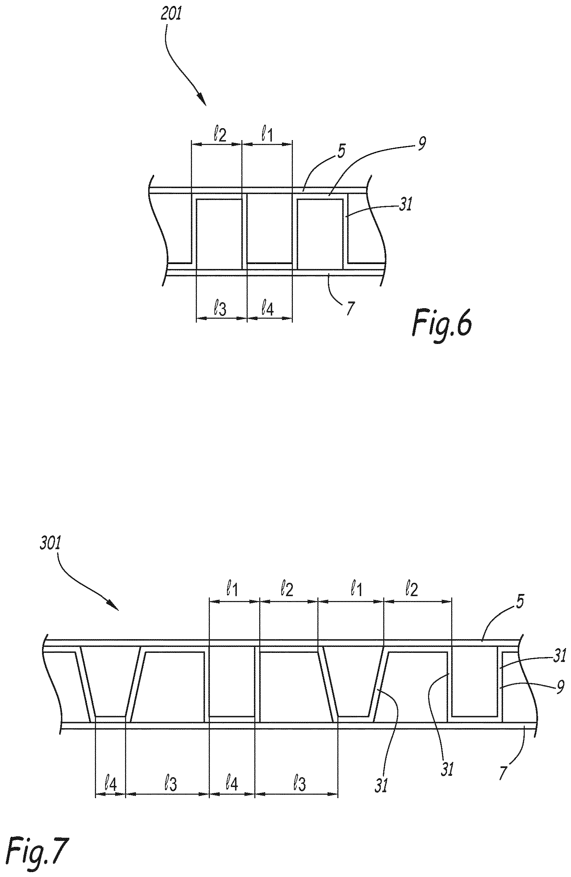

Dans la structure de conformation 201 du mode de réalisation de la figure 6, les longueurs l1, l2, l3 et l4 sont égales, ce qui conduit à des rayons 31 parallèles entre eux.

Dans la structure de conformation 301 du mode de réalisation de la figure 7, les longueurs l2 sont égales entre elles alors que les longueurs l1 sont de valeur différente. De même, les longueurs l3 sont égales, alors que les longueurs l4 présentent des valeurs différentes. Certaines rayons 31 sont perpendiculaires aux feuilles 5 et 7, alors que d'autres sont obliques.

En variante, d'autres rapports entre les longueurs l1 et l2 peuvent être adoptés en fonction de l'application, afin d'adapter l'aire des surfaces 22 et 26 à l'application souhaitée.

Selon l'invention, quel que soit le mode de réalisation envisagé, au moins feuille de conformation comprend de préférence une ou plusieurs couches de matériau non-tissé. Parmi les couches de non-tissé, on peut prévoir ur voile de verre, c'est-à-dire un matériau surfacique non tissé comprenant des fibres de verre liées les unes aux autres. Cette liaison peut être effectuée chimiquement, par exemple à l'aide d'une colle. En particulier, les fibres de verres sont des fibres courtes.

Le voile de verre permet d'obtenir que les feuilles de conformation présentent avantageusement une porosité qui les rend perméables à certains gaz, à la vapeur d'eau et à certains solvants volatiles, tout en étant imperméables à certains liquides et aux solides. Plus particulièrement, cette porosité est adaptée pour permettre le durcissement ou le séchage d'un matériau durcissable introduit dans la structure de conformation entre les feuilles de conformation. Même si le voile de verre est préféré, toute autre couche de matériau non-tissé permettant d'obtenir de telles propriétés peut être utilisée, selon l'application envisagée.

Toutefois, on peut prévoir qu'au moins l'une des feuilles de conformation est imperméable à certains gaz, notamment l'air ou l'hélium, notamment dans le cas où la structure de conformation est utilisée pour la circulation d'air ou est gonflée.

En tant que couche de non-tissé, on peut également prévoir le matériau thermosensible susmentionné, pour permettre la fixation des couches de conformation à la couche d'entretoisement par soudage.

On peut également prévoir un film en matériau thermoplastique ou thermodurcissable.

Pour chaque feuille de conformation, on peut prévoir deux couches, ou davantage encore, de matériau non-tissé distinctes, par exemple une couche de voile de verre susmentionné et une couche de matériau thermosensible susmentionné.

En variante, une seule des deux feuilles de conformation comprend l'une des couches de matériau non-tissé susmentionnées, alors que l'autre feuille de conformation en est dépourvue.

Dans un autre mode de réalisation, au moins l'une des feuilles de conformation comprend une couche de tissu, optionnellement enduite, afin d'obtenir des propriétés de porosité telles que susmentionnées. La présence du tissu peut servir à conférer un renfort mécanique à la feuille de conformation concernée.

Selon l'invention, comme dans l'exemple illustré aux figures 1 à 4, la feuille d'entretoisement 9 comprend, voire est formée par, une grille de fils, les macropores étant formés par les ouvertures délimitées par les mailles de cette grille. L'utilisation d'une telle grille permet d'obtenir un compromis satisfaisant entre le prix de revient de la structure de conformation 1 et sa résistance mécanique, tout en conférant ce caractère macroporeux à la feuille 9. De préférence, la feuille 9 est constituée exclusivement d'une grille de fils.

La grille susmentionnée comprend un assemblage de fils rectilignes agencés les uns par rapport aux autres en répétant, régulièrement dans le plan de la grille, un motif élémentaire préétabli.

Dans un mode de réalisation, ce motif comprend des fils se croisant avec un angle compris entre 45 et 90°, en général à 90°. Ces fils forment ainsi des fils longitudinaux et des fils transversaux, les fils transversaux étant orientés avec l'angle précité par rapport aux fils longitudinaux. On préfère que les fils transversaux soient dirigés selon une direction D2 parallèle au plan P1 et perpendiculaire à la direction D1, alors que les fils longitudinaux sont orientés selon l'angle précité par rapport aux fils transversaux. On peut prévoir que les fils transversaux soient orientés de façon oblique par rapport à la direction D2. Dans ce mode de réalisation, le motif de la grille consiste donc en un quadrilatère, tel qu'un un parallélogramme, un rectangle, un carré, ou un losange. Ce quadrilatère peut être complété d'une diagonale, de préférence de ses deux diagonales, formées par des fils de diagonale de la grille. Le motif peut également, à titre d'exemple, consister en un losange complété d'une de ses diagonales ou de ses deux diagonales. Autrement dit, par répétition régulière du motif précité, dans les deux directions longitudinale et transversale de la grille, la totalité de cette grille est obtenue. Ainsi, les différents fils constituant la grille sont positionnés les uns par rapport aux autres suivant une géométrie préétablie, aussi bien en orientation relative qu'en espacement relatif dans le plan de la grille.

Pour former la feuille d'entretoisement, on peut prévoir une superposition de plusieurs grilles, afin d'obtenir une plus grande résistance mécanique.

De préférence et à titre d'exemple non limitatif, les fils constitutifs de la grille peuvent comprendre des fils en verre, en polyester, en aramide, en carbone, en polyamide, en matériaux cellulosiques, en métal type cuivre ou acier ou en un mélange de plusieurs de ces matériaux. D'autres matériaux peuvent être envisagés. Au sein de la même grille, des fils réalisés en des matériaux respectifs différents et avec des titres respectifs différents peuvent être mélangés. On préfère un matériau qui est compatible avec le matériau utilisé pour la couche centrale, et qui résiste notamment à l'alcalinité ou à l'acidité éventuelle du matériau de la couche centrale.

De préférence, les fils transversaux de la grille sont entrecroisés avec tout ou partie des fils longitudinaux. Ainsi, certains fils font fonction de fils de trame, tandis que les autres fils font fonction de fils de chaîne. En variante, les fils ne s'entrecroisent pas, mais se superposent, en étant répartis en au moins deux nappes superposées. Dans un mode de réalisation préféré, la grille est formée par un réseau de fils croisés ou superposés non tissés comprenant au moins deux nappes de fils de longitudinaux entre lesquels est interposée au moins une nappe de fils de transversaux. Toutefois, le nombre de nappes et leur répartition dans l'épaisseur de la grille peut être adapté au cas d'espèce.

Les fils sont, à leurs entrecroisements ou à leurs croisements, collés ou soudés les uns aux autres, en fonction des matériaux des fils. Pour le collage, on prévoit avantageusement un liant créant une série de points de collage au niveau de l'intersection du réseau de fils. Tout liant ou colle couramment utilisé à ce jour dans le domaine technique considéré pourra être utilisé, et en particulier tout liant ou colle thermoplastique. A titre non limitatif, les liaisons du réseau de fils formant la grille textile conforme à l'invention pourra être formée par des latex synthétiques (par exemple SBR), du PVAC, des plastisols, du PVC, de l'alcool polyvinylique (PVA), des imprégnations thermocollantes classiques, des liants polyuréthanes ou des liants acryliques par exemple. On peut prévoir une enduction de la grille avec de tels matériaux, l'enduction pouvant permettre, ou au moins contribuer, au collage des fils à leurs intersections.

A titre non limitatif, la grille peut comprendre une densité de fils longitudinaux comprise entre 0,25 fil par centimètre et 5 fils par centimètre, et pour les fils de transversaux entre 0,25 fil par centimètre et 5 fils par centimètre. On prévoit préférentiellement entre 0,5 et 2 fils par centimètre.

Le nombre de fil par centimètre détermine la dimension nominale des macropores. Ainsi, 0,5 fil par centimètre correspond à une dimension nominale de macropore d'environ 20 mm, ou légèrement moins, ce qui dépend du titre des fils de la grille. 2 fils par centimètre donne une dimension nominale de macropores d'environ 5 mm. 5 fils par centimètre donne une dimension nominale de macropores d'environ 2 mm. 0,25 fil par centimètre correspond à une taille de macropores d'environ 40 mm.

On peut prévoir une densité de fils longitudinaux différente de la densité de fils transversaux. Dans ce cas, la dimension des macropores est calculée à partir de la moyenne des deux valeurs de densité de fils.

De façon avantageuse, le poids de la grille est compris entre 5 et 300 g/m2, de préférence entre 100 et 200 g/m2.

De façon alternative ou de façon additionnelle, la feuille d'entretoisement comprend un tissu suffisamment lâche pour former des macropores, ou encore une couche de matériau non tissé pourvue d'orifices traversants formant les macropores. De façon générale, la feuille d'entretoisement peut être formée d'une ou plusieurs couches de tout matériau, dès lors que des macropores tels que susmentionnés sont formés.

La feuille d'entretoisement 9, du fait de sa construction sous forme d'une grille ou sous la forme des autres modes susmentionnés, confère son caractère autoportant à la structure 1, notamment du fait du caractère suffisamment souple pour se déformer élastiquement, et suffisamment rigide pour maintenir écartée l'une de l'autre les feuilles 5 et 7.

On peut également prévoir qu'au moins l'une des feuilles de conformation comprend une grille. Cela permet de conférer un renfort structurel à cette feuille de conformation, notamment de façon additionnelle avec une couche de matériau non-tissé. L'autoportance de la structure 1 s'en trouve avantageusement améliorée.

Tel qu'illustré à la figure 3, la couche centrale est formée par un matériau durcissable. Par matériau durcissable, on entend un matériau qui est apte à évoluer d'un état non durci à un état durci. A l'état non durci, le matériau durcissable est suffisamment liquide ou mou pour être introduit, notamment par coulée ou injection, entre les deux feuilles de conformation. A l'état non durci, le matériau durcissable est adapté pour se répartir entre les deux feuilles de conformation, notamment sous l'effet de la gravité, de vibrations et/ou d'une pression, pour occuper au moins la majorité de l'espace ménagé entre ces deux feuilles de conformation. Le matériau durcissable à l'état non durci prend alors la forme des feuilles de conformation, c'est-à-dire qu'il est conformé, moulé ou coffré par ces feuilles.

Le matériau durcissable à l'état durci peut être choisi pour être solide et relativement dur, et ainsi conférer des propriétés de tenue mécanique à la pièce composite. Alternativement ou de surcroit, on peut choisir le matériau pour qu'il confère à la pièce composite, à l'état durci, des propriétés d'isolation thermique ou phonique, pour lesquelles il n'est pas nécessairement solide ou dur. Le matériau durcissable passe de l'état non durci à l'état durci par séchage, ou à l'aide d'une réaction chimique ou tout autre moyen. Par « état non durci », on inclut un état dans lequel le matériau concerné est en cours de durcissement.

Le matériau durcissable de la couche centrale est choisi pour, à l'état non durci, traverser la couche d'entretoisement par l'intermédiaire des macropores, mais pour ne pas traverser les feuilles de conformation, ou sinon de façon marginale. Toutefois, la porosité des couches d'entretoisement est préférentiellement choisie pour permettre le séchage, ou plus généralement le passage à l'état durci, du matériau de la couche centrale. A titre d'exemple, le matériau de la couche centrale peut être un thermoplastique, un thermodurcissable ou un béton.

A la place du matériau « durcissable » susmentionné, on peut prévoir un matériau réticulable, qui évolue entre un état non réticulé et un état réticulé, de façon correspondante à l'état non durci et à l'état durci susmentionné, les considérations concernant le matériau durcissable, son état non durci et son état durci s'appliquant mutatis mutandis au matériau réticulable, dans son état non réticulé et dans son état réticulé.

En tant que matériau durcissable ou réticulable, on prévoit préférentiellement un matériau qui adopte une structure moussée, c'est-à-dire forme une mousse, lorsqu'il est à l'état durci ou réticulé. Cela permet notamment d'obtenir les propriétés d'isolation thermique ou phonique susmentionnées. En fonction de l'application souhaitée, le matériau moussant est par exemple un polyétherimide (avec un solvant de moussage du genre acétone), un polyuréthane (avec un agent de moussage du type chlorure de méthylène et dioxyde de carbone) ou un béton moussé (agent moussant à base de protéines ou d'enzyme synthétique). La structure de conformation joue avantageusement le rôle d'un conformateur de mousse, pour un moussage in-situ du matériau durcissable ou réticulable.

Par « béton moussé », on entend notamment une mousse minérale, c'est-à-dire préférentiellement un matériau à base de ciment, éventuellement de sable et de chaux, et présentant une structure aérée. Le béton moussé présente par exemple une densité de 40 à 300 kg/m³, par exemple 100 kg/m³. Avantageusement, le béton moussé est dépourvu de fibre et de matière plastique.

L'aération de la structure, ou moussage, est obtenue à l'aide d'un agent moussant tel que celui susmentionné, ou d'autres types d'agents, en fonction du moussage souhaité. Le béton moussé peut avantageusement avoir subi une étape d'autoclavage lors de sa fabrication.

Le béton moussé présente avantageusement des propriétés de d'isolation thermique et acoustique utiles pour la construction ou la rénovation de bâtiments. Le béton moussé permet par exemple d'obtenir, en soi, un coefficient d'isolation thermique de 0,035 W/(m.K) à 0,10 W/(m.K), par exemple 0,040 W/(m.K). Le béton moussé est avantageusement incombustible et imputrescible.

En fonction de l'application, on peut prévoir que de l'air et/ou un gaz spécifique est/sont enfermés dans les bulles formées par le béton moussé.

De préférence, chaque couche externe, ou au moins l'une d'entre elles, est également formée par un matériau durcissable ou réticulable. On peut néanmoins prévoir un matériau de type différent, à savoir un matériau qui n'a pas un caractère durcissable ou réticulable, pour l'une des couches externes. A titre d'exemple, ce matériau non durcissable peut être un panneau de bois, d'aluminium. On peut prévoir une couche externe préformée, comprenant ou non un matériau durcissable ou réticulable. La couche externe préformée peut être formée par un matériau durcissable ou réticulable déjà durci ou réticulé, respectivement.

De manière avantageuse, le matériau de la couche centrale est différent du matériau choisi pour la couche externe. S'il y a deux couches externes, leur matériau respectif peut être différent.

Par matériau « différent », on entend par exemple des matériaux comprenant des constituants différents, ou dans des proportions différentes, ou définissant une structure différente, ou encore une densité différente. A titre d'exemple, le matériau durcissable de la couche centrale est à base de polyétherimide, alors que le matériau durcissable de la couche externe est à base de polyuréthane, ou l'inverse. Selon un autre exemple, le matériau durcissable de la couche centrale est à base de thermoplastique, alors que le matériau durcissable de la couche externe est à base thermodurcissable, ou l'inverse. Selon un autre exemple, le matériau durcissable de la couche centrale est à base de béton, alors que le matériau durcissable de la couche externe est à base de plâtre, ou l'inverse. Selon un autre exemple, le matériau durcissable de la couche centrale est un béton lourd, alors que le matériau durcissable de la couche externe est un béton fibré, ou l'inverse.

Toutefois, on peut prévoir que deux des couches, ou sinon toutes les couches, parmi les couches centrale et externe, sont formées avec les mêmes matériaux, c'est-à-dire des matériaux qui ne sont pas différents selon la définition ci-avant.

La structure de conformation, quel que soit son mode de réalisation, permet de mettre en œuvre un procédé de fabrication d'un matériau composite tel que défini dans ce qui précède.

Pour fabriquer la pièce 3 illustré sur la figure 3, on met en œuvre une étape a) d'introduction d'un matériau durcissable ou réticulable, dans un état non durci, ou respectivement non réticulé, entre les deux feuilles 5 et 7 pour former la couche 30. Par conformation de ce matériau, les deux feuilles de conformation délimitent la forme de la couche 30. En d'autres termes, on utilise la structure de conformation comme conformateur du matériau de la couche 30. On fait ensuite passer ce matériau à un état durci ou réticulé pour figer la couche 30 et lui conférer ses propriétés définitives.

La fabrication de la pièce 3 de la figure 3 comprend également une étape b) d'introduction d'un autre matériau durcissable ou réticulable, dans un état non durci ou non réticulé, contre la face externe 34 de la feuille 5 pour former la couche externe 32. Cette étape b) est préférentiellement effectuée soit en même temps que l'étape a), soit postérieurement à l'étape a), alors que le matériau formant la couche centrale 30 est à l'état non durci ou non réticulé. La feuille 5 permet aux matériaux des couches 30 et 32 de ne pas se mélanger, alors même qu'ils sont à l'état non durci ou non réticulé. On fait ensuite passer le matériau durcissable ou réticulable de la couche 32 à l'état durci, pour figer cette couche 32.

La couche externe 33 peut être formée selon un mode opératoire similaire à celui de la couche 32, ou selon tout mode opératoire approprié.

Inversement, l'étape b) peut être effectuée préalablement à l'étape a) alors que le matériau de la couche 32 est encore à l'état non durci.

En variante, l'étape b) susmentionnée est effectuée après l'étape a), alors que le matériau de la couche 30 est à l'état durci. L'étape a) peut également être effectuée après l'étape b), alors que le matériau de la couche 32 est à l'état durci.

En variante, on peut prévoir de rapporter la couche de externe 32 et/ou 33 contre la face 34 et/ou 36 concernée, par accolement ou tout moyen de fixation approprié, notamment si la couche externe est préformée, et/ou que cette couche externe comprend un matériau non durcissable tel que du bois.

Le caractère souple des feuilles de conformation permet de créer une pièce composite dont la forme n'est pas nécessairement celle illustrée à la figure 3. En effet, on peut par exemple donner une forme courbe aux feuilles 5 et 7 tant que le matériau de la couche centrale n'est pas figé, de façon à conformer ce dernier avec une courbure, pour former une pièce composite de la forme désirée, plutôt que plane.

## Revendications

1. Structure de conformation (1 ; 101 ; 201 ; 301), comprenant deux feuilles de conformation (5, 7) se faisant face à distance l'une par rapport à l'autre, la structure de conformation (1 ; 101 ; 201 ; 301) comprenant en outre une feuille d'entretoisement (9), la feuille d'entretoisement (9) étant disposée entre les deux feuilles de conformation (5, 7) et étant ondulée de façon à décrire une succession de crêtes paires (18) et de crêtes impaires (20), alternées et réparties selon une première direction (D1) de la structure de conformation, au moins l'une des crêtes paires (18) étant fixée à la première feuille de conformation (5), au moins l'une des crêtes impaires (20) étant fixée à la deuxième feuille de conformation (7), chaque crête (18, 20) ainsi fixée définissant une surface de fixation (22, 26) contre la feuille de conformation (5, 7) à laquelle cette crête (18, 20) est fixée, la structure de conformation étant **caractérisée en ce que** :
- parmi les deux feuilles de conformation (5, 7), au moins une feuille de conformation comprend une couche de matériau non-tissé, et
- la feuille d'entretoisement (9) est macroporeuse et comprend une grille de fils longitudinaux et de fils transversaux liés à leurs intersections.

2. Structure de conformation (1 ; 101 ; 201 ; 301) selon la revendication 1, **caractérisée en ce que** :
- on prévoit qu'au moins deux crêtes paires (18) successives sont fixées à la première feuille (5) de conformation, définissant ainsi respectivement deux surfaces de fixation (22) successives, et
- une longueur inter-crêtes (l1), mesurée parallèlement à la première direction (D1) entre ces deux surfaces de fixation (22) successives, est d'une valeur comprise entre 1,0 fois et 1,5 fois la valeur d'une longueur de surface (l2) de la surface de fixation (22), cette longueur de surface (l2) étant mesurée parallèlement à la première direction (D1).

3. Structure de conformation (1 ; 101 ; 201) selon l'une quelconque des revendications précédentes, **caractérisée en ce que** :
- les crêtes paires (18) sont régulièrement réparties le long de la première direction (D1), et
- les crêtes impaires (20) sont régulièrement réparties le long de la première direction (D1).

4. Structure de conformation (1 ; 101 ; 201 ; 301) selon l'une quelconque des revendications précédentes, **caractérisée en ce qu'**au moins l'une des surfaces de fixation (22, 26) est le siège d'une fixation à l'aide d'un agent de fixation, tel qu'un liant thermoplastique, liant la crête (18, 20) concernée avec la feuille de conformation (5, 7) concernée, l'agent de fixation étant réparti sur la surface de fixation (22, 26) de cette crête (18, 20).

5. Structure de conformation (1 ; 101 ; 201 ; 301) selon l'une quelconque des revendications précédentes, **caractérisée en ce qu'**au moins l'une des surfaces de fixation (22, 26) est le siège d'une fixation par soudage de la crête (18, 20) concernée avec la feuille de conformation (5, 7) concernée, et **en ce que** la feuille de conformation (5, 7) concernée comprend une couche de matériau thermosensible utilisé pour ce soudage.

6. Structure de conformation (1 ; 101 ; 201 ; 301) selon l'une quelconque des revendications précédentes, **caractérisée en ce qu'**au moins l'une des surfaces de fixation (22, 26) est le siège d'une fixation par couture de la crête (18, 20) concernée avec la feuille de conformation (5, 7) concernée.

7. Structure de conformation (1 ; 101 ; 201 ; 301), selon l'une quelconque des revendications précédentes, **caractérisée en ce que** la couche de matériau non-tissé comprend un voile de verre comprenant des fibres de verre liées les unes aux autres.

8. Structure de conformation (1 ; 101 ; 201 ; 301) selon l'une quelconque des revendications précédentes, **caractérisée en ce que** les macropores de la feuille d'entretoisement (9) présentent une dimension nominale comprise entre environ 2 et 40 mm, de préférence entre 5 et 20 mm.

9. Structure de conformation (1 ; 101 ; 201 ; 301) selon l'une quelconque des revendications précédentes, **caractérisée en ce que** la grille de fils présente une densité de fils comprise entre 0,25 et 5 fils par centimètre, de préférence entre 0,5 et 2 fils par centimètre.

10. Pièce composite (3), **caractérisée en ce que** la pièce composite (3) comprend :
- une structure de conformation (1 ; 101 ; 201 ; 301) conforme à l'une quelconque des revendications précédentes, et
- une couche centrale (30), formée par un matériau durcissable ou réticulable, respectivement à l'état durci ou réticulé, la couche centrale (30) occupant l'espace compris entre les deux feuilles de conformation (5, 7), la feuille d'entretoisement (9) s'étendant au sein de la couche centrale (30).

11. Pièce composite selon la revendication 10, **caractérisé en ce que** le matériau durcissable ou réticulable présente une structure moussée lorsqu'il est respectivement à l'état durci ou réticulé.

12. Procédé de fabrication d'une pièce composite (3) conforme à l'une quelconque des revendications 10 ou 11, **caractérisé en ce que** le procédé de fabrication comprend une étape a) d'introduction du matériau durcissable ou réticulable, respectivement dans un état non durci ou non réticulé, entre les deux feuilles de conformation (5, 7) de la structure de conformation (1 ; 101 ; 201 ; 301) pour former la couche centrale (30), les deux feuilles de conformation (5, 7) délimitant la forme de la couche centrale (30) par conformation du matériau durcissable ou réticulable entre ces deux feuilles de conformation (5, 7).

## Patentansprüche

1. Formgebungsstruktur (1; 101; 201; 301), die zwei Formgebungsblätter (5, 7) umfasst, die einander in einem Abstand gegenüberliegen, wobei die Formgebungsstruktur (1; 101; 201; 301) ferner ein Versteifungsblatt (9) umfasst, wobei das Versteifungsblatt (9) zwischen den beiden Formgebungsblättern (5, 7) angeordnet ist und derart gewellt ist, dass es eine Folge von geraden Wellenkämmen (18) und ungeraden Wellenkämmen (20) beschreibt, die sich abwechseln und entlang einer ersten Richtung (D1) der Formgebungsstruktur verteilt sind, wobei mindestens eine der geraden Wellenkämme (18) an dem ersten Formgebungsblatt (5) befestigt ist und mindestens einer der ungeraden Wellenkämme (20) an dem zweiten Formgebungsblatt (7) befestigt ist, wobei jeder derart befestigte Wellenkamm (18, 20) eine Befestigungsfläche (22, 26) gegen das Formgebungsblatt (5, 7) definiert, an dem dieser Wellenkamm (18, 20) befestigt ist,
wobei die Formgebungsstruktur **dadurch gekennzeichnet ist, dass**:
- von den beiden Formgebungsblättern (5, 7) mindestens ein Formgebungsblatt eine Schicht aus Vliesmaterial umfasst, und
- das Versteifungsblatt (9) makroporös ist und ein Gitter aus Längs- und Querfäden umfasst, die an ihren Kreuzungspunkten miteinander verbunden sind.

2. Formgebungsstruktur (1; 101; 201; 301) nach Anspruch 1, **dadurch gekennzeichnet, dass**:
- mindestens zwei aufeinanderfolgende gerade Wellenkämme (18) an dem ersten Formgebungsblatt (5) befestigt sind, wodurch jeweils zwei aufeinanderfolgende Befestigungsflächen (22) definiert werden, und
- eine Länge zwischen den Wellenkämmen (11), gemessen parallel zu der ersten Richtung (D1) zwischen diesen beiden aufeinanderfolgenden Befestigungsflächen (22), einen Wert zwischen dem 1,0-Fachen und dem 1,5-Fachen einer Flächenlänge (l2) der Befestigungsfläche (22) aufweist, wobei diese Flächenlänge (l2) parallel zu der ersten Richtung (D1) gemessen wird.

3. Formgebungsstruktur (1; 101; 201) nach einem beliebigen der vorhergehenden Ansprüche, **dadurch gekennzeichnet, dass**:
- die gerade Wellenkämme (18) gleichmäßig entlang der ersten Richtung (D1) verteilt sind, und
- die ungerade Wellenkämme (20) gleichmäßig entlang der ersten Richtung (D1) verteilt sind.

4. Formgebungsstruktur (1; 101; 201; 301) nach einem beliebigen der vorhergehenden Ansprüche, **dadurch gekennzeichnet, dass** mindestens eine der Befestigungsflächen (22, 26) der Sitz einer Befestigung mit Hilfe eines Befestigungsmittels, wie eines thermoplastischen Bindemittels, ist, das den betreffenden Wellenkamm (18, 20) mit dem betreffenden Formgebungsblatt (5, 7) verbindet, wobei das Befestigungsmittel über die Befestigungsfläche (22, 26) dieses Wellenkamms (18, 20) verteilt ist.

5. Formgebungsstruktur (1; 101; 201; 301) nach einem beliebigen der vorhergehenden Ansprüche, **dadurch gekennzeichnet, dass** mindestens eine der Befestigungsflächen (22, 26) der Sitz einer Befestigung durch Verschweißen des betreffenden Wellenkamms (18, 20) mit dem betreffenden Formgebungsblatt (5, 7) ist, und dass das betreffende Formgebungsblatt (5, 7) eine Schicht aus wärmeempfindlichem Material aufweist, die für dieses Verschweißen verwendet wird.

6. Formgebungsstruktur (1; 101; 201; 301) nach einem beliebigen der vorhergehenden Ansprüche, **dadurch gekennzeichnet, dass** mindestens eine der Befestigungsflächen (22, 26) der Sitz einer Befestigung durch Vernähen des betreffenden Wellenkamms (18, 20) mit dem betreffenden Formgebungsblatt (5, 7) ist.

7. Formgebungsstruktur (1; 101; 201; 301) nach einem beliebigen der vorhergehenden Ansprüche, **dadurch gekennzeichnet, dass** die Schicht aus Vliesmaterial ein Glasvlies umfasst, das miteinander verbundene Glasfasern enthält.

8. Formgebungsstruktur (1; 101; 201; 301) nach einem beliebigen der vorhergehenden Ansprüche, **dadurch gekennzeichnet, dass** die Makroporen des Versteifungsblattes (9) eine Nennabmessung zwischen etwa 2 und 40 mm, vorzugsweise zwischen 5 und 20 mm, aufweisen.

9. Formgebungsstruktur (1; 101; 201; 301) nach einem beliebigen der vorhergehenden Ansprüche, **dadurch gekennzeichnet, dass** das Fadengitter eine Fadendichte zwischen 0,25 und 5 Fäden pro Zentimeter, vorzugsweise zwischen 0,5 und 2 Fäden pro Zentimeter aufweist.

10. Verbundteil (3), **dadurch gekennzeichnet, dass** das Verbundteil (3) umfasst:
- eine Formgebungsstruktur (1; 101; 201; 301) nach einem beliebigen der vorhergehenden Ansprüche und
- eine Mittelschicht (30), die aus einem härtbaren oder vernetzbaren Material, jeweils im gehärteten oder vernetzten Zustand, gebildet ist, wobei die Mittelschicht (30) den Raum zwischen den beiden Formgebungsblättern (5, 7) einnimmt, wobei sich das Versteifungsblatt (9) innerhalb der Mittelschicht (30) erstreckt.

11. Verbundteil nach Anspruch 10, **dadurch gekennzeichnet, dass** das härtbare oder vernetzbare Material im ausgehärteten oder vernetzten Zustand eine Schaumstruktur aufweist.

12. Verfahren zur Herstellung eines Verbundteils (3) nach einem beliebigen der Ansprüche 10 oder 11, **dadurch gekennzeichnet, dass** das Herstellungsverfahren einen Schritt umfasst, bei dem a) das aushärtbare oder vernetzbare Material jeweils in einem unausgehärteten oder unvernetzten Zustand zwischen die beiden Formgebungsblätter (5, 7) der Formgebungsstruktur (1; 101; 201; 301) eingebracht wird, um die Mittelschicht (30) zu bilden, wobei die beiden Formgebungsblätter (5, 7) die Form der Mittelschicht (30) durch Formgebung des aushärtbaren oder vernetzbaren Materials zwischen diesen beiden Formgebungsblätter (5, 7) begrenzen.

## Claims

1. A shaping structure (1; 101; 201; 301), comprising two shaping sheets (5, 7) facing each other at a distance from one another, wherein the shaping structure (1; 101; 201; 301) further comprises a spacer sheet (9), the spacer sheet (9) being arranged between the two shaping sheets (5, 7) and being corrugated in such a way as to form a series of alternating even peaks (18) and odd peaks (20), distributed in a first direction (D1) of the shaping structure, at least one of the even peaks (18) being attached to the first shaping sheet (5), at least one of the odd peaks (20) being attached to the second shaping sheet (7), each peak (18, 20) attached in this way defining an attachment surface (22, 26) for attachment to the shaping sheet (5, 7) to which this peak (18, 20) is attached, the shaping structure being **characterized in that**:
- among the two shaping sheets (5, 7), at least one shaping sheet comprises a layer of nonwoven material; and
- the spacer sheet (9) is macroporous and comprises a grid of longitudinal threads and transverse threads connected at their intersections.

2. The shaping structure (1; 101; 201; 301) according to claim 1, **characterized in that**:
- it is provided that at least two successive even peaks (18) are attached to the first shaping sheet (5), thus respectively defining two successive attachment surfaces (22), and
- a length (11) between peaks, measured parallel to the first direction (D1) between these two successive attachment surfaces (22), has a value of between 1.0 times and 1.5 times the value of a surface length (12) of the attachment surface (22), this surface length (12) being measured parallel to the first direction (D1).

3. The shaping structure (1; 101; 201) according to any one of the preceding claims, **characterized in that**:
- the even peaks (18) are regularly distributed in the first direction (D1), and
- the odd peaks (20) are regularly distributed in the first direction (D1).

4. The shaping structure (1; 101; 201; 301) according to any one of the preceding claims, **characterized in that** at least one of the attachment surfaces (22, 26) is the seat of an attachment using an attachment agent, such as a thermoplastic binder, attaching the peak (18, 20) in question with the shaping sheet (5, 7) in question, the attachment agent being distributed on the attachment surface (22, 26) of this peak (18, 20).

5. The shaping structure (1; 101; 201; 301) according to any one of the preceding claims, **characterized in that** at least one of the attachment surfaces (22, 26) is the seat of an attachment by welding of the peak (18, 20) in question with the shaping sheet (5, 7) in question, and **in that** the attachment sheet (5, 7) in question comprises a layer of heat-sensitive material used for this welding.

6. The shaping structure (1; 101; 201; 301) according to any one of the preceding claims, **characterized in that** at least one of the attachment surfaces (22, 26) is the seat of an attachment by sewing of the peak (18, 20) in question with the shaping sheet (5, 7) in question.

7. The shaping structure (1; 101; 201; 301), according to any one of the preceding claims, **characterized in that** the layer of nonwoven material comprises a glass web comprising glass fibers connected to one another.

8. The shaping structure (1; 101; 201; 301) according to any one of the preceding claims, **characterized in that** the macropores of the spacer sheet (9) have a nominal size of between about 2 and 40 mm, preferably between 5 and 20 mm.

9. The shaping structure (1; 101; 201; 301) according to any one of the preceding claims, **characterized in that** the grid of threads has a density of threads of between 0.25 and 5 threads per centimeter, preferably between 0.5 and 2 threads per centimeter.

10. A composite part (3), **characterized in that** the composite part (3) comprises:
- a shaping structure (1; 101; 201; 301) according to any one of the preceding claims, and
- a central layer (30), formed by a hardenable or cross-linkable material, respectively in the hardened or cross-linked state, the central layer (30) occupying the space between the two shaping sheets (5, 7), the spacer sheet (9) extending within the central layer (30).

11. The composite part according to claim 10, **characterized in that** the hardenable or cross-linkable material has a foamed structure when it is respectively in the hardened or cross-linked state.

12. The method for manufacturing a composite part (3) according to any one of claims 10 or 11, **characterized in that** the manufacturing method comprises a step a) for introducing hardenable or cross-linkable material, respectively in a non-hardened or non-cross-linked state, between the two shaping sheets (5, 7) of the shaping structure (1; 101; 201; 301) in order to form the central layer (30), the two shaping sheets (5, 7) delimiting the shape of the central layer (30) by shaping of the hardenable or cross-linkable material between these two shaping sheets (5, 7).
